# EUROPEAN PATENT SPECIFICATION

(11) **EP 1 411 623 B1**
(45) Date of publication and mention of the grant of the patent: **16.09.2009**
(21) Application number: 03023122.9
(22) Date of filing: 10.10.2003
(51) Int. Cl.: H02M 7/12

(54) **Input inrush current control and/or output short-circuit control to a boost converter in a power supply**
Steuerung für Eingangs-Einschaltsstrom und/oder Ausgangs-Kurzschlussstrom in dem Aufwärtswandler einer Stromversorgung
Contrôle de courant d'entrée de démarrage et/ou de courant de sortie de court-circuit dans le convertisseur élévateur de tension d'une alimentation de puissance

(30) Priority: 15.10.2002 EP 02023012
(43) Date of publication of application: 21.04.2004
(73) Proprietor: Vincotech Holdings S.a.r.l., 2636 Luxembourg (LU)
(72) Inventor: Temesi, Ernö, 2094 Nagykovàcsi (HU); Ozsvath, Attila, 2060 Bicske (HU)
(74) Representative: Grünecker, Kinkeldey, Stockmair & Schwanhäusser Anwaltssozietät

(56) References cited:
- EP-A- 0 748 035
- EP-A- 1 176 688
- US-A- 5 614 810
- US-A- 5 790 395
- US-B1- 6 285 170

## Description

The invention relates to an electronic circuit for limiting an input inrush and/or short-circuit current supplied to a boost converter in a power supply.

Many power supplies have voltage and current limiters in order to suppress undesirable and spurious current and voltage spikes. Sometimes the voltage spikes are generated by electrical equipment using the same power line, other times the transient surges are caused by the power supply being quickly switched between on and off positions.

In order to avoid damage to the power supply, inrush current needs to be suppressed. In many conventional power supplies there is an input capacitor or a capacitor bank. The input capacitor or the capacitor bank charges when the power supply is initially turned on. In this state, the capacitor or the capacitor bank acts as a short-circuit and does not limit input current. As a result, the inrush current may activate a circuit breaker or even overload a circuit near the power input.

To reduce the inrush current most conventional power supplies are provided with thermistors and relays. For example, United States Patent No. 5,420,780 discloses a circuit for limiting an inrush current in a DC power supply. The inrush limiting circuit is placed between an alternating current (AC) input power line and a power supply input capacitor bank. A thermistor is located between the capacitor bank and an input diode bridge to limit an initial inrush current. Once the input capacitor bank is fully charged, an insulated-gate bipolar transistor (IGBT) switches a rectified line voltage to a boost power factor correction converter circuit to block the thermistor by means of a diode. This switching keeps the thermistor cold to maintain high resistance in case of a new off/on cycle.

Thermistors, however, cannot be used with large power supplies without risking damage to the thermistor. As a result, thermistors are being replaced with a common resistor shunted by a triac or a silicon controlled rectifier (SCR). For example, United States Patent No. 6,055,167 discloses a circuit for limiting an inrush current wherein the input inrush current is reduced by phasing up an input voltage in a controlled manner. The circuit uses a SCR in an input bridge of the circuit to control the input inrush current. This arrangement, however, has its drawbacks in that if the SCR fails, the power supply will ultimately be damaged.

Another problem associated with power supplies is high current peeks and very high currents in the circuit that cause damage to the power supply when short-circuiting the direct current (DC) outputs. Conventional power supplies are provided with high voltage switches to suppress the short-circuit current. These switches are often costly, however, and increase the complexity of the circuit.

US 6 285 170 B1 relates to a switching power supply comprising a boost converter, a smoothing capacitor for smoothing an output voltage from the boost converter, and inrush current limiting means for limiting an inrush current flowing into the smoothing capacitor. The inrush current limiting means is connected between the boost converter and the smoothing capacitor. A transformer couples the output voltage of the boost converter to the feedback circuit. A rectifying diode stack is used for rectifying the input signal.

US 5 790 395 relates to a low inrush current power factor control circuit that provides near unity power factor, is capable of controlling and limiting the inrush current that occurs when the circuit is initially supplied with an AC mains input voltage and is further capable of controlling the DC output voltage of the circuit from a level above to below the peak AC mains input voltage.

It is an object of the invention to provide an electronic circuit that limits an input inrush current in a power supply as well as limits a short-circuit current when short-circuiting a DC output of the power supply while reducing costs and/or the complexity of the electronic circuit.

This object is solved by the invention as claimed in the independent claims.
Preferred embodiments of the invention are defined by the dependent claims.

The invention will be described in greater detail herein with reference to the following figures, in which:
Figure 1 is a schematic circuit diagram of an electronic circuit including a power supply with a boost converter according to a first embodiment of the invention; and
Figure 2 is a schematic circuit diagram of an electronic circuit including a power supply with a boost converter according to a second embodiment of the invention.

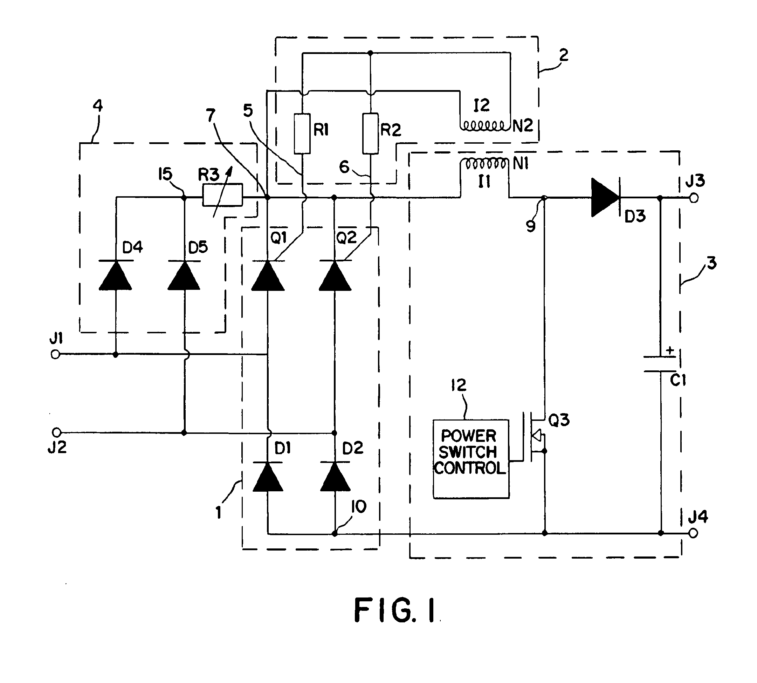

Figure 1 shows an electronic circuit including a power supply with a boost converter 3 for limiting an input inrush current and a short-circuit current according to a first embodiment of the invention. As shown in Figure 1, the circuit includes a rectifier circuit 1 that rectifies an alternating current (AC) input current signal supplied from AC input terminals J1, J2. The rectifier circuit 1 is formed by a bridge circuit with four rectifying elements D1, D2, Q1, Q2. Two of the rectifying elements Q1, Q2, are controlled rectifiers that can be switched on or off between a conductive or non-conductive state in response to a switching signal supplied by lines 5 and 6. The two other rectifying elements D1, D2 may be, for example, diodes as shown in the figure or operational amplifier circuits, which rectify the AC input signal delivered from the AC input terminals J1, J2.

The circuit shown in figure 1 further includes a feedback circuit 2. A feedback inductor I2 of the feedback circuit 2 is connected at one side to a current supplying output of the rectifier circuit to form a first output terminal of a bridge circuit. The current supplying output of the rectifier circuit corresponds to junction point 7. A second output of the bridge circuit corresponds to junction point 10. The feedback inductor I2 is connected via two shunted resistors R1, R2 to lines 5 and 6, respectively, providing a switching signal to the rectifying elements Q1, Q2. The resistors R1, R2 may be variable resistors or other elements that output up to a maximum current. Alternatives are for example thermistors, in particular positive temperature coefficient (PTC) thermistors that limit their own dissipation and allow permanent short-circuit control with very low internal dissipation. It is, therefore, possible to feed back a switching signal through the feedback circuit 2 to the rectifier circuit 1 to switch the rectifying elements Q1, Q2 on or off between the conductive or nonconductive states.

In order to generate the switching signal for switching the rectifier circuit 1, the boost converter 3 is connected to the current supplying output of the rectifier circuit 1 by an input inductor I1. The input inductor I1 is connected via a diode D3 to a first direct current (DC) output terminal J3. Between the input inductor I1 and the diode D3, the input inductor I1 is connected to a power switch Q3. The power switch Q3 may be any controllable switch or power switch, such as, a transistor, etc. A power switch control 12 controls the switching of the power switch Q3 by a control signal. A single capacitor C1 is connected between the DC output terminal J3 and DC output terminal J4. A capacitor bank may also be used instead of the capacitor C1. The boost converter 3 will not be described in further detail herein, because boost converters, especially in boost power factor correction circuits, are well known in the art. A detailed description of an exemplary boost power factor correction circuit may be found in United States Patent No. 4,677,366.

A current limiting circuit 4 is connected across the AC input signal lines from the AC input terminals J1, J2 to the current supplying output of the rectifier circuit 1. The current limiting circuit 4 includes two rectifying elements D4, D5 that rectify the AC input current signal supplied from the AC input terminals J1, J2. The rectified signals pass through a resistor R3 that is connected to the current supplying output of the rectifier circuit 1.

The operation of the electronic circuit according to the first embodiment and the switching of the rectifying elements Q1, Q2 by the switching signal will now be described in greater detail.

The switching signal is generated by the inductive coupling of the input inductor I1 of the boost converter 3 and the feedback inductor I2 of the feedback circuit 2. When the AC power supply is turned on, the current will flow through the current limiting circuit 4 towards the boost converter 3 supplying up to a maximum input current to the boost converter 3. In this state, the diodes D1, D2, D4, D5 build a bridge circuit that rectifies the AC input signal. The current supplying output of the initial bridge circuit of the diodes D1, D2, D4, D5 is connected via the resistor R3 to the input of the boost converter 3 at junction point 15. The input signal is thereby supplied via the resistor R3 to the boost converter 3, and the resistor R3 in the current limiting circuit 4 limits the input inrush current into the boost converter 3.

If a load connected to the DC output terminals J3, J4, consumes sufficient power, the inductive coupling of the input inductor I1 of the boost converter 3 will induce a sufficiently high voltage in the feedback inductor I2 of the feedback circuit 2. The induced voltage forms a switching signal that, in a case where the switching signal is sufficiently high, will bring the rectifying elements Q1, Q2 into the conductive state. As soon as the rectifier circuit 1 is switched on, the maximum available power from the AC power source may be supplied via the AC input terminals J1, J2 and via the rectifier circuit 1 to the boost converter 3. The available power to the boost converter 3, and thus an attached load, is then only limited by the available power of the AC power source. In the state in which the rectifying elements Q1, Q2 are in a conducting state, the rectifying elements Q1, Q2 and the diodes D1, D2 build the rectifier circuit 1. The rectifying elements Q1, Q2 thereby directly supply the input signal to the input of the boost converter 3.

If the DC output terminals J3, J4 are short-circuited, the voltage at the input inductor I1 of the boost converter 3 will drop to zero volts. As a result, no voltage will be induced to the feedback inductor I2. Because no voltage is induced to the feedback inductor I2, the rectifier circuit 1 or the rectifying elements Q1, Q2 are switched off. In this case, the current supplied from AC power supply from the AC input terminals J1, J2 is only supplied to the boost converter 3 via the current limiting circuit 4. Thus, in contrast to the situation where the rectifier circuit 1 is switched on and supplies up to the maximum power of the AC power supply to the boost converter 3, only a limited current will be delivered to the boost converter 3 by resistor R3. Hence, the short-circuit current in the power supply can be effectively controlled.

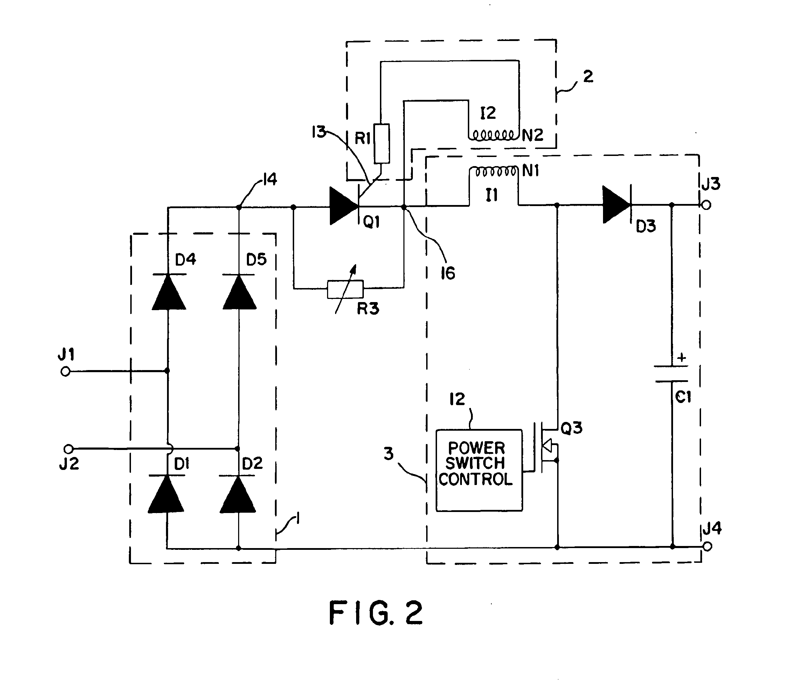

Figure 2 shows an electronic circuit including a power supply with a boost converter 3 for limiting an input inrush current and a short-circuit current according to a second embodiment of the invention. As shown in Figure 2, the circuit includes a rectifier circuit 1. The rectifier circuit 1 has a similar bridge layout as the first embodiment of the invention shown in Figure 1. The rectifier circuit 1 is connected to AC input terminals J1, J2 and includes four rectifying elements D1, D2, D4, D5. A power supplying output at junction point 14 of the rectifier circuit 1 is connected via a controlled rectifying element Q1 to the boost converter 3. The rectifying element may be, for example, a diode. A resistor R3 is arranged in parallel to the controlled rectifying element Q1. The resistor R3 may be, for example, a variable resistor, a normal resistor, or the like. Additionally, any element that limits an input current to a maximum level and that can be operated in a power supply is suitable to be employed as a resistor R3 in the circuit. Alternatives are for example thermistors, in particular PTC thermistors that limit their own dissipation and allow permanent short-circuit control with very low internal dissipation.

A feedback circuit 2 includes a feedback inductor I2 and a resistor R1. The feedback inductor I2 is connected between the resistor R1 and junction point 16. The junction point 16 is located between the controlled rectifying element Q1 and an input inductor I1 of the boost converter 3. The resistor R1 is connected via a switching signal line 13 to the controlled rectifying element Q1. A switching signal can be applied to the controlled rectifying element Q1 through line 13, which operates as a switch.

The boost converter 3 is identical to the boost converter 3 described in the first embodiment of the invention shown in Figure 1. A detailed description of the boost converter 3 of the second embodiment of the invention will therefore be omitted.

The operation of the electronic circuit according to the second embodiment and the switching of the controlled rectifying elements Q1 by the switching signal will now be described in greater detail.

The switching signal of the second embodiment of the invention is generated in the same manner as the switching signal described in the first embodiment of the invention shown in Figure 1 wherein that the switching signal is generated by the inductive coupling of the input inductor I1 of the boost converter 3 and the feedback inductor I2 of the feedback circuit 2. When the AC power supply is turned on, the rectifier circuit 1 will rectify the AC input signal supplied from the AC input terminals J1, J2. The rectified input signals are passed via the resistor R3 to the boost converter 3. In this state, the controlled rectifying element Q1 is in a nonconductive state, because no voltage drops across the input inductor I1 that could induce voltage in the feedback inductor I2.

If a load attached to the DC output terminals J3, J4 consumes sufficient power to cause the voltage at the input inductor I1 of the boost converter 3 to be sufficiently high, an induced voltage in the feedback inductor I2 of the feedback circuit 2 will bring the controlled rectifying element Q1 into a conductive state. In this case, the total current supplied to the boost converter 3 will flow through the controlled rectifying element Q1. The rectifying element Q1 has a negligible resistance compared to the resistor R3.

If the DC output terminals J3, J4 are short-circuited, the voltage at the input conductor I1 will be caused to drop to zero volts by the diode D3 and the boost converter 3. Because no voltage is induced in the feedback inductor I2, the rectifying element Q1 is switched off. In this case, the current supplied from the AC power supply to the boost converter 3 is only supplied through the resistor R3, which will limit the maximum current flowing into the boost converter 3. Hence, the short-circuit current in the power supply can be effectively controlled.

It is important to recognize that in the first and second embodiments of the invention, the switching signal can be influenced by the number of windings N1 in the input inductor I1 of the boost converter 3 and the number of windings N2 in the feedback inductor I2 of the feedback circuit 2. The induced voltage V_{I2} of the feedback inductor I2 is proportional to the ratio of the number of windings N2/N1 times the voltage V_{I1} of the input inductor I1 of the boost converter 3. Thus, by choosing the appropriate ratio N2/N1 the switching voltage may be adapted to individual needs. The switching signal, and thus the switching of the rectifying elements Q1, Q2 or the controlled rectifying element Q1, may also be influenced by the polarization of the windings N2 of the feedback inductor I2 of the feedback circuit 2, for example, the threshold voltage of the rectifying elements Q1, Q2, the threshold voltage of the controlled rectifying element Q1, the value of the resistor R1, etc.

## Claims

1. An electronic circuit for limiting an input inrush and/or output short-circuit current supplied to a boost converter (3) in a power supply, the electronic circuit comprises:
a current limiting circuit (4)
a rectifier circuit (1) for rectifying an input current of an alternating current power supply;
a feedback circuit (2) for feeding back a switching signal to the rectifier circuit (1) to switch the rectifier circuit (1) on and off;
the electronic circuit is connected between input lines of the alternating current power supply and input lines of the boost converter (3).
the feedback circuit (2) includes a feedback inductor (12) inductively coupled to an input inductor (11) of the boost converter (3);
**characterized in that**
the feedback circuit (2) includes at least two resistors (R1, R2) connected to the feedback inductor (12) and the rectifier circuit (1) includes at least two controllable rectifying elements (Q1, Q2); wherein the switching signal is fed over each of the at least two resistors (R1, R2) to the at least two controllable rectifying elements (Q1, Q2), when the voltage at the input inductor (I1) is sufficiently high.

2. The electronic circuit according to claim 1, **characterized in that**, the feedback inductor (12) is connected to a current supplying output of the rectifier circuit (1).

3. The electronic circuit according to claim 1, **characterized in that** the feedback inductor (12) and the input inductor (I1) each have a number of windings and the switching signal is controlled by a ratio of the number of windings.

4. The electronic circuit according to claim 1, **characterized in that** the feedback inductor (12) and the input inductor (I1) each have windings and the switching signal is controlled by a polarization of the windings.

5. The electronic circuit according to claim 1, **characterized in that** the boost converter (3) includes a power switch (Q3) connected between the input inductor (I1) and a first output terminal (J3), a diode (D3) connected between the input inductor (I1) and the first output terminal (J3), and a capacitor (C1) connected between the first output terminal (J3) and a second output terminal (J4).

6. The electronic circuit according to claim 1, **characterized in that** the rectifier circuit (1) supplies a rectified input current to the boost converter (3) when the rectifier circuit (1) is switched on by the switching signal.

7. The electronic circuit according to claim 6, wherein the current limiting circuit (4) limits the input current to the boost converter (3) when the rectifier circuit (1) is switched off by the switching signal.

8. The electronic circuit according to claim 7, **characterized in that** the current limiting circuit (4) is connected across the input lines of the alternating current power supply and to a current supplying output of the rectifier circuit (1).

9. The electronic circuit according to claim 8, **characterized in that** the current limiting circuit includes at least two rectifying elements (D4, D5) connected to at least one of the input lines of the alternating current power supply, the at least two rectifying elements (D4, D5) being connected to a resistor (R3), the resistor (R3) being arranged between the at least two rectifying elements (D4, D5) and the current supplying output of the rectifier circuit (1).

10. The electronic circuit according to claim 1 **characterized in that** the rectifier circuit (1) is a bridge circuit including at least two controllable rectifying elements (Q1, Q2) that can be switched on and off by the switching signal.

11. The electronic circuit according to any of claims 1 to 10, wherein the controllable rectifying element (Q1) connected between a current supplying output of the rectifier circuit (1) and an input of the boost converter (3) for controlling the current supplied to the boost converter (3);
the feedback circuit (2) is further adapted to feed back a switching signal to the controllable rectifying element (Q1) to change the current supplied to the boost converter (3).

12. The electronic circuit according to claim 11, **characterized in that** a resistor (R3) for limiting the current supplied to the boost converter (3), the resistor (R3) being in parallel to the controllable rectifying element (Q1), the resistor (R3) supplies a limited input current to the boost converter (3) when the controllable rectifying element (Q1) is switched off by the switching signal.

13. The electronic circuit according to claim 11, **characterized in that** the rectifier circuit (1) is a bridge circuit including at least two rectifying elements (D4, D5).

## Patentansprüche

1. Elektronische Schaltung zum Begrenzen eines Eingangseinschaltstromes und/oder eines Ausgangskurzschlussstromes, der einem Aufwärtswandler (3) in einer Stromversorgung zugeführt wird, wobei die elektronische Schaltung Folgendes umfasst:
eine Strombegrenzungsschaltung (4);
eine Gleichrichter-Schaltung (1) zum Gleichrichten eines Eingangsstromes einer Wechselstromversorgung;
eine Rückkopplungsschaltung (2) zum Rückkoppeln eines Schaltsignals zur Gleichrichter-Schaltung (1), um die Gleichrichter-Schaltung (1) ein- und auszuschalten;
wobei die elektronische Schaltung zwischen Eingangslinien der Wechselstromversorgung und Eingangslinien des Aufwärtswandlers (3) geschaltet ist;
wobei die Rückkopplungsschaltung (2) eine Rückkopplungsinduktivität (12) umfasst, die mit einer Eingangsinduktivität (I1) des Aufwärtswandlers (3) induktiv gekoppelt ist;
**dadurch gekennzeichnet, dass**
die Rückkopplungsschaltung (2) zumindest zwei Widerstände (R1, R2) umfasst, die mit der Rückkopplungsinduktivität (I2) verbunden sind, und die Gleichrichter-Schaltung (1) zumindest zwei steuerbare Gleichrichterelemente (Q1, Q2) umfasst; wobei das Schaltsignal den zumindest zwei steuerbaren Gleichrichterelementen (Q1, Q2) über jeden der zumindest zwei Widerstände (R1, R2) zugeführt wird, wenn die Spannung an der Eingangsinduktivität (I1) ausreichend hoch ist.

2. Elektronische Schaltung gemäß Anspruch 1, **dadurch gekennzeichnet, dass** die Rückkopplungsinduktivität (I2) mit einem stromversorgenden Ausgang der Gleichrichter-Schaltung (1) verbunden ist.

3. Elektronische Schaltung gemäß Anspruch 1, **dadurch gekennzeichnet, dass** die Rückkopplungsinduktivität (I2) und die Eingangsinduktivität (I1) jeweils eine Anzahl von Wicklungen aufweisen und das Schaltsignal durch ein Verhältnis der Anzahl der Wicklungen gesteuert wird.

4. Elektronische Schaltung gemäß Anspruch 1, **dadurch gekennzeichnet, dass** die Rückkopplungsinduktivität (I2) und die Eingangsinduktivität (I1) jeweils Wicklungen aufweisen, und das Schaltsignal durch eine Polarisierung der Wicklungen gesteuert wird.

5. Elektronische Schaltung gemäß Anspruch 1, **dadurch gekennzeichnet, dass** der Aufwärtswandler (3) einen Leistungsschalter (Q3), der zwischen der Eingangsinduktivität (I1) und einer ersten Ausgangsklemme (J3) angeordnet ist, eine Diode (D3), die zwischen der Eingangsinduktivität (I1) und der ersten Ausgangsklemme (J3) angeordnet ist, und einen Kondensator (C1), der zwischen der ersten Ausgangsklemme (J3) und einer zweiten Ausgangsklemme (J4) angeordnet ist, umfasst.

6. Elektronische Schaltung gemäß Anspruch 1, **dadurch gekennzeichnet, dass** die Gleichrichter-Schaltung (1) dem Aufwärtswandler (3) einen gleichgerichteten Eingangsstrom zuführt, wenn die Gleichrichter-Schaltung (1) durch das Schaltsignal eingeschaltet wird.

7. Elektronische Schaltung gemäß Anspruch 6, wobei die Strombegrenzungsschaltung (4) den dem Aufwärtswandler (3) zugeführten Eingangsstrom begrenzt, wenn die Gleichrichter-Schaltung (1) durch das Schaltsignal ausgeschaltet wird.

8. Elektronische Schaltung gemäß Anspruch 7, **dadurch gekennzeichnet, dass** die Strombegrenzungsschaltung (4) über die Eingangslinien der Wechselstromversorgung und mit einem stromversorgenden Ausgang der Gleichrichter-Schaltung (1) verbunden ist.

9. Elektronische Schaltung gemäß Anspruch 8, **dadurch gekennzeichnet, dass** die Strombegrenzungsschaltung zumindest zwei Gleichrichterelemente (D4, D5) umfasst, die mit zumindest einer der Eingangslinien der Wechselstromversorgung verbunden sind, wobei die zumindest zwei Gleichrichterelemente (D4, D5) mit einem Widerstand (R3) verbunden sind, wobei der Widerstand (R3) zwischen den zumindest zwei Gleichrichterelementen (D4, D5) und dem stromversorgenden Ausgang der Gleichrichter-Schaltung (1) angeordnet ist.

10. Elektronische Schaltung gemäß Anspruch 1, **dadurch gekennzeichnet, dass** die Gleichrichter-Schaltung (1) eine Brückenschaltung ist, die zumindest zwei steuerbare Gleichrichterelemente (Q1, Q2) umfasst, die durch das Schaltsignal ein- und ausgeschaltet werden können.

11. Elektronische Schaltung gemäß einem der Ansprüche 1 bis 10, wobei das steuerbare Gleichrichterelement (Q1) zwischen einem stromversorgenden Ausgang der Gleichrichter-Schaltung (1) und einem Eingang des Aufwärtswandlers (3) zum Steuern des dem Aufwärtswandler (3) zugeführten Stromes geschaltet ist;
wobei die Rückkopplungsschaltung (2) weiterhin angepasst ist, dem steuerbaren Gleichrichterelement (Q1) ein Schaltsignal rückzukoppeln, um den dem Aufwärtswandler (3) zugeführten Strom zu ändern.

12. Elektronische Schaltung gemäß Anspruch 11, **dadurch gekennzeichnet, dass** sie weiterhin einen Widerstand (R3) zum Begrenzen des dem Aufwärtswandler (3) zugeführten Stromes umfasst, wobei der Widerstand (R3) parallel zum steuerbaren Gleichrichterelement (Q1) geschaltet ist, wobei der Widerstand (R3) dem Aufwärtswandler (3) einen begrenzten Eingangsstrom zuführt, wenn das steuerbare Gleichrichterelement (Q1) durch das Schaltsignal ausgeschaltet wird.

13. Elektronische Schaltung gemäß Anspruch 11, **dadurch gekennzeichnet, dass** die Gleichrichter-Schaltung (1) eine Brückenschaltung ist, die zumindest zwei Gleichrichterelemente (D4, D5) umfasst.

## Revendications

1. Circuit électronique destiné à limiter un courant de démarrage en entrée et/ou un courant de court-circuit en sortie fourni à un convertisseur boost (3) dans une alimentation électrique, le circuit électronique comprenant :
un circuit de limitation de courant (4) ;
un circuit redresseur (1) destiné à redresser un courant d'entrée d'une alimentation électrique à courant alternatif ;
un circuit de boucle de retour (2) destiné à fournir en retour un signal de commutation au circuit redresseur (1), afin de mettre le circuit redresseur (1) en marche et en arrêt ;
le circuit électronique est connecté entre des lignes d'entrée de l'alimentation électrique à courant alternatif et des lignes d'entrée du convertisseur boost (3) ;
le circuit de boucle de retour (2) inclut une inductance de boucle de retour (I2) couplée inductivement à une inductance d'entrée (I1) du convertisseur boost (3) ;
**caractérisé en ce que**
le circuit de boucle de retour (2) inclut au moins deux résistances (R1, R2) connectées à l'inductance de boucle de retour (I2) et le circuit redresseur (1) inclut au moins deux éléments de redressement (Q1, Q2) pouvant être commandés, dans lequel le signal de commutation est fourni aux au moins deux éléments de redressement (Q1, Q2) qui peuvent être commandés par le biais de chacune des au moins deux résistances (R1, R2), quand la tension à l'inductance d'entrée (I1) est suffisamment élevée.

2. Circuit électronique selon la revendication 1, **caractérisé en ce que** l'inductance de boucle de retour (I2) est connectée à une sortie fournissant du courant du circuit redresseur (1).

3. Circuit électronique selon la revendication 1, **caractérisé en ce que** l'inductance de boucle de retour (I2) et l'inductance d'entrée (I1) ont chacune un nombre d'enroulements et le signal de commutation est commandé par un rapport du nombre d'enroulements.

4. Circuit électronique selon la revendication 1, **caractérisé en ce que** l'inductance de boucle de retour (I2) et l'inductance d'entrée (I1) ont chacune des enroulements et le signal de commutation est commandé par une polarisation des enroulements.

5. Circuit électronique selon la revendication 1, **caractérisé en ce que** le convertisseur boost (3) inclut un interrupteur de puissance (Q3) connecté entre l'inductance d'entrée (I1) et un premier terminal de sortie (J3), une diode (D3) connectée entre l'inductance d'entrée (I1) et le premier terminal de sortie (J3), et un condensateur (C1) connecté entre le premier terminal de sortie (J3) et un second terminal de sortie (J4).

6. Circuit électronique selon la revendication 1, **caractérisé en ce que** le circuit redresseur (1) fournit un courant d'entrée redressé au convertisseur boost (3) quand le circuit redresseur (1) est mis en marche par le signal de commutation.

7. Circuit électronique selon la revendication 6, dans lequel le circuit de limitation de courant (4) limite le courant d'entrée fourni au convertisseur boost (3) quand le circuit redresseur (1) est mis en arrêt par le signal de commutation.

8. Circuit électronique selon la revendication 7, **caractérisé en ce que** le circuit de limitation de courant (4) est connecté à travers les lignes d'entrée de l'alimentation électrique à courant alternatif et à une sortie du circuit redresseur (1) fournissant un courant.

9. Circuit électronique selon la revendication 8, **caractérisé en ce que** le circuit de limitation de courant (4) inclut au moins deux éléments de redressement (D4, D5) connectés à au moins l'une des lignes d'entrée de l'alimentation électrique à courant alternatif, les au moins deux éléments de redressement (D4, D5) étant connectés à une résistance (R3), la résistance (R3) étant disposée entre les au moins deux éléments de redressement (D4, D5) et la sortie du circuit redresseur (1) fournissant un courant.

10. Circuit électronique selon la revendication 1, **caractérisé en ce que** le circuit redresseur (1) est un circuit-pont incluant au moins deux éléments de redressement (Q1, Q2) pouvant être commandés et qui peuvent être mis en marche et arrêt par le signal de commutation.

11. Circuit électronique selon l'une des revendications 1 à 10, dans lequel l'élément de redressement (Q1) pouvant être commandé est connecté entre une sortie du circuit redresseur (1) fournissant un courant et une entrée du convertisseur boost (3) destiné à commander le courant fourni au convertisseur boost (3) ;
le circuit de boucle de retour (2) est destiné en outre à fournir en boucle de retour un signal de commutation à l'élément de redressement (Q1) pouvant être commandé, afin de changer le courant fourni au convertisseur boost (3).

12. Circuit électronique selon la revendication 11, **caractérisé en ce qu'**il comprend en outre une résistance (R3) destinée à limiter le courant fourni au convertisseur boost (3), la résistance (R3) étant en parallèle avec l'élément de redressement (Q1) pouvant être commandé, dans lequel la résistance (R3) fournit un courant d'entrée limité au convertisseur boost (3) quand l'élément de redressement (Q1) pouvant être commandé est mis en arrêt par le signal de commutation.

13. Circuit électronique selon la revendication 11, **caractérisé en ce que** le circuit redresseur (1) est un circuit-pont incluant au moins deux éléments de redressement (D4, D5).
